# EUROPEAN PATENT APPLICATION

(11) **EP 1 542 001 A1**
(43) Date of publication of application: **15.06.2005**
(21) Application number: 03792698.7
(22) Date of filing: 18.08.2003
(51) Int. Cl.: G01N 27/62, G01N 27/447

(54) **SOLID SUPPORT AND METHOD OF MASS SPECTROMETRY OF MULTIPLE SUBSTANCES OR COMPOSITES IMMOBILIZED ON THE SOLID SUPPORT THROUGH DESORPTION/IONIZATION**

(30) Priority: 21.08.2002 JP 2002240905; 20.02.2003 JP 2003042491
(71) Applicant: Toyo Kohan Co., Ltd., Tokyo 102-8447 (JP)
(72) Inventor: TANGA, Michifumi c/o TOYO KOHAN CO., LTD., Kudamatsu-shi, Yamaguchi 744-8611 (JP); KAMEI, Shuuichi c/o TOYO KOHAN CO., LTD., Kudamatsu-shi, Yamaguchi 744-8611 (JP); OKAMURA, Hiroshi c/o TOYO KOHAN CO., LTD., Kudamatsu-shi, Yamaguchi 744-8611 (JP); YAMAKAWA, Kaoru c/o TOYO KOHAN CO., LTD., Kudamatsu-shi, Yamaguchi 744-8611 (JP); YAMANO, Hirofumi c/o TOYO KOHAN CO., LTD., Kudamatsu-shi, Yamaguchi 744-8611 (JP); OHBA, Mityuyoshi c/o TOYO KOHAN CO., LTD., Kudamatsu-shi, Yamaguchi 744-8611 (JP); HIRANO, Hisashi, Yokohama-shi, Kanagawa 233-0003 (JP)
(74) Representative: VOSSIUS & PARTNER
(86) International application number: PCT/JP2003/010406
(87) International publication number: WO 2004/019025

(57) **Abstract**

Means for effecting rapid mass spectrometry of a multiplicity of samples; and a method of rapidly analyzing biosubstances such as nucleic acids and proteins. The above means is a solid support provided with a carbon layer onto which substances separated by gel electrophoresis are transferred. The above method is one for mass spectrometry of multiple substances which comprises separating substances of a sample by gel electrophoresis, transferring separated substances of the gel onto the above solid support so as to immobilize the same and subjecting the immobilized substances to desorption/ionization.

## Description

### TECHNICAL FIELD

The present invention relates to a solid support, on which substances separated into gel are immobilized by transferring the substances, and a method of assaying and analyzing biosubstances, such as nucleic acids, proteins, etc. , immobilized on the solid support through rapid mass spectrometry.

### BACKGROUND ART

Most of biosubstances, such as peptides, proteins, nucleic acids, saccharides, etc. are formed such that relatively small number of constitutional units polymerize in a particular rule. For example, peptides and proteins are ones, in which twenty kinds of L-α-amino acids couple together in peptide bond. Most of molecular structures of these constitutional units have already been made apparent, and naturally correct molecular weights of them have been made apparent. Accordingly, when molecular weights of biosubstances and fragments thereof can be correctly measured, it greatly contributes to analysis of structures (configuration, etc.) thereof and various modification reactions in a living body, so that the method of mass spectrometry is located as means indispensable for the structure analysis of biosubstances such as proteins, etc. Laser desorption/ionization-time-of-flight type mass spectrometry apparatuses among mass spectrometry can ionize giant macromolecules such as DNA, proteins, etc., and so have become the object of attention as useful means for analysis of biosubstances.

In laser desorption/ionization-time-of-flight type mass spectrometry apparatuses, laser is irradiated on a region of a specimen, analysis of which is desired, and ions desorbing from the region are accelerated in an electric field. By doing this, the smaller ions being in m/z value, that is, the lighter the ions, the higher in speed the ions fly to reach a detector. Laser desorption/ionization-time-of-flight type mass spectrometry is a method of mass spectrometry making use of the fact that ions are different in flight time according to differences in mass charge ratio (m/z value).

On the other hand, it is necessary in structural analysis/determination of biosubstances such as DNA, proteins, etc. by means of mass spectrometry to analyze fragments obtained by separating and refining an object being analyzed into multiple components and using restricted enzymes to fragment the individual components, and so very many specimens must be analyzed. Also, it is necessary in DNA diagnosis to rapidly process specimens obtained from many humans.

In contrast, with general laser desorption/ionization-time-of-flight type mass spectrometry apparatuses, which are commercially available, respective specimens as refined are placed on a sample board and subjected to mass spectrometry one by one. That is, it is necessary to irradiate laser on respective specimens as sampled to analyze them one by one. Accordingly, in the case where non-refined specimens are desorbed in electrophoresis, it is necessary to cut gel after electrophoresis every band to refine the cut ones, respectively, to subject the same one by one to mass spectrometry with the use of a laser desorption/ionization-time-of-flight type mass spectrometry apparatus, and so it is very difficult to rapidly analyze a multiplicity of specimens.

Also, while there is known a method, in which biosubstances having been subjected to electrophoresis are transferred to a membrane made of nitrocellulose, etc. from gel and analyzed, mass spectrometry making use of laser cannot be performed in analysis on the membrane but the analysis is limited to fluorescence detection making use of antigen-antibody reaction and nucleic acid hybridization. This is because there is a high possibility that conventionally used membranes made of nitrocellulose, PVDF, etc. undergo decomposition of membranes themselves upon laser irradiation. That is, it is difficult to analyze biosubstances, which have been transferred to these membranes, with the use of the laser desorption/ionization-time-of-flight type mass spectrometry apparatuses as they are.

It is an object of the invention to provide means for rapid mass spectrometry of a multiplicity of specimens and a method of rapidly carrying out analysis of biosubstances, such as nucleic acids, proteins, etc.

### DISCLOSURE OF THE INVENTION

The inventors of the present application have completed the invention finding, as a result of earnest examination for the purpose of solving the problem, that the problem can be solved by a method, in which after substances in a specimen are separated through gel electrophoresis, the substances separated and developed in the gel are immobilized on a solid support, on a surface of which a carbon layer is formed, and subjected to mass spectrometry through desorption/ionization.

That is, the present invention contains the following ones.
(1) A solid support comprising a carbon layer on a surface thereof, and wherein after substances contained in a specimen are separated by gel electrophoresis, the substances are immobilized on the solid support by transfer of the substances separated in the gel.
(2) A solid support comprising a carbon layer on a surface thereof, and wherein after substances contained in a specimen are separated through gel electrophoresis, the substances are immobilized on the solid support by transferring the substances separated in the gel to a membrane and further transferring the substances transferred to the membrane.
(3) A solid support, in which composites are formed by adding further substances, which interact with the substances immobilized on the solid support according to (1) or (2), to the substances.
(4) The solid support according to any one of (1) to (3), wherein the carbon layer comprises a diamond-like carbon layer.
(5) The solid support according to any one of (1) to (4), wherein the carbon layer has a thickness of a monomolecular layer to 100 µm.
(6) The solid support according to any one of (1) to (5), wherein the surface of the carbon layer is activated through chemical modification.
(7) The solid support according to any one of (1) to (6), wherein the immobilized substances comprise nucleic acids or peptides.
(8) A method for mass spectrometry through desorption/ionization of multiple substances or composites immobilized on the solid support according to any one of (1) to (7).
(9) A solid support comprising a carbon layer on a surface thereof, and for use in the method according to (8).

### BRIEF DESCRIPTION OF THE DRAWINGS

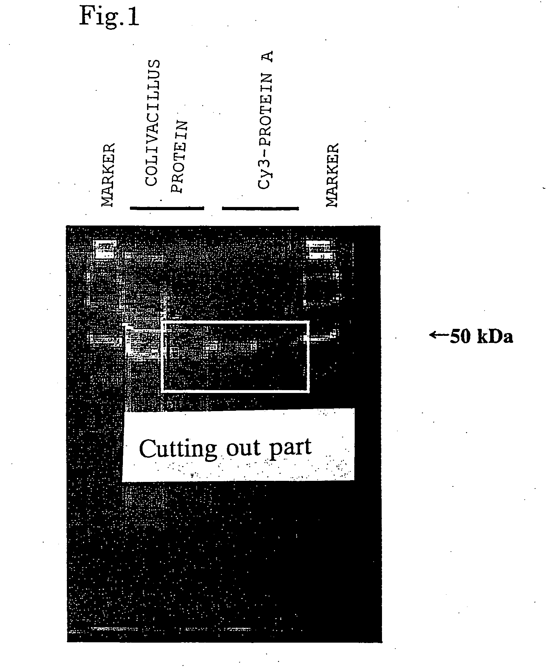

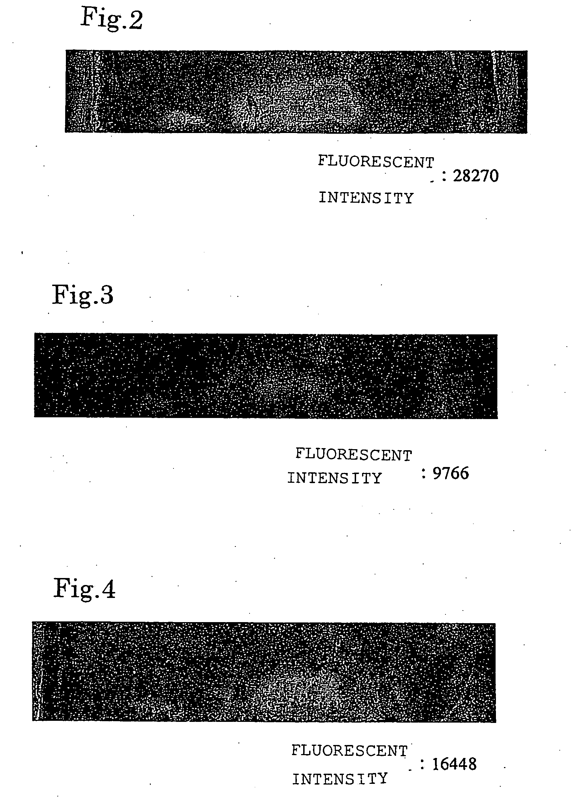

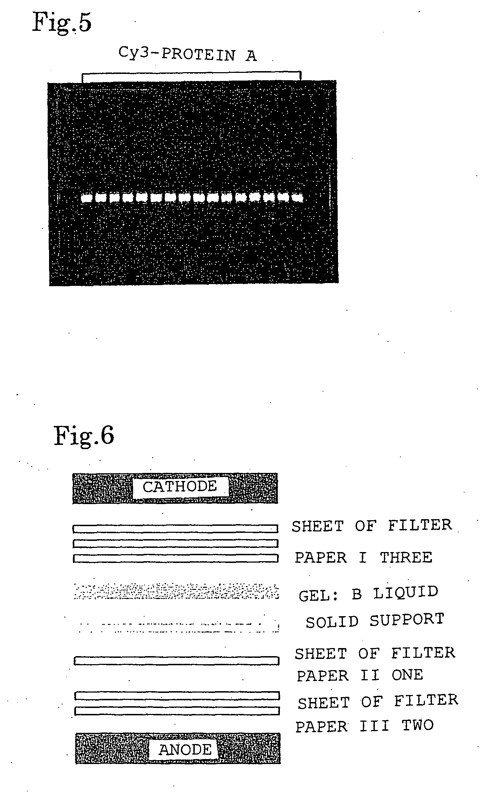

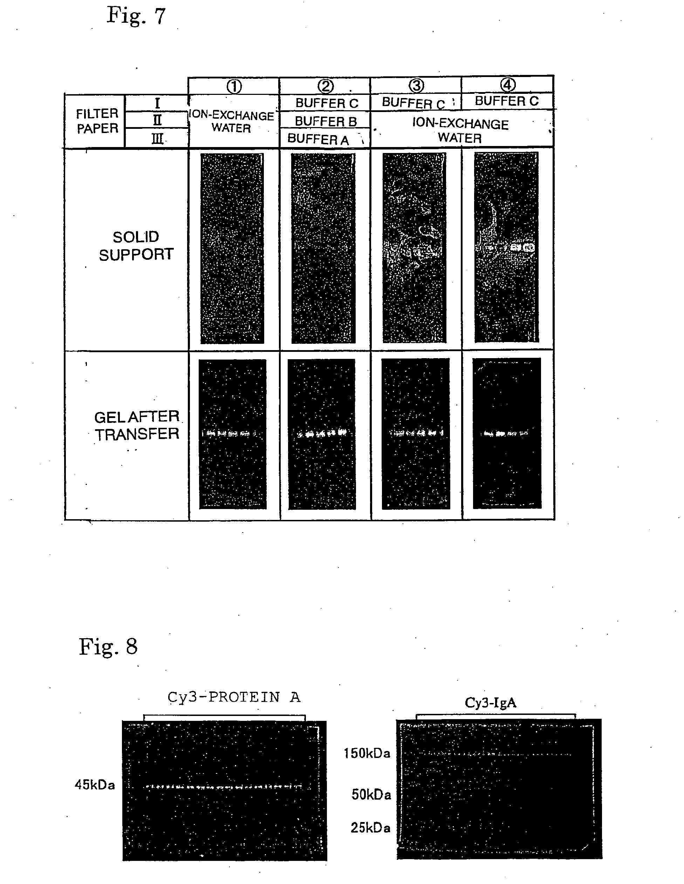

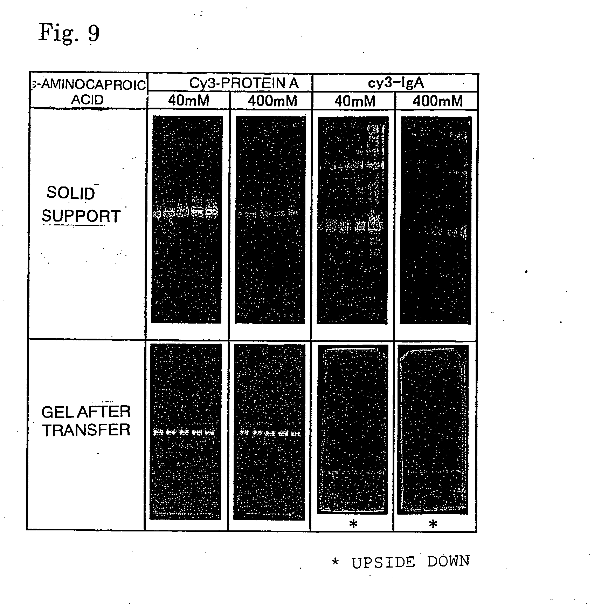

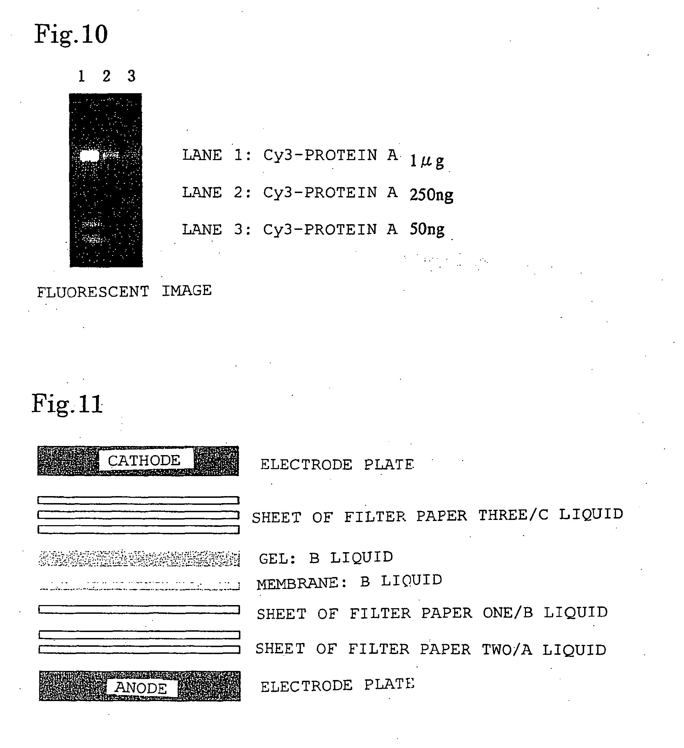

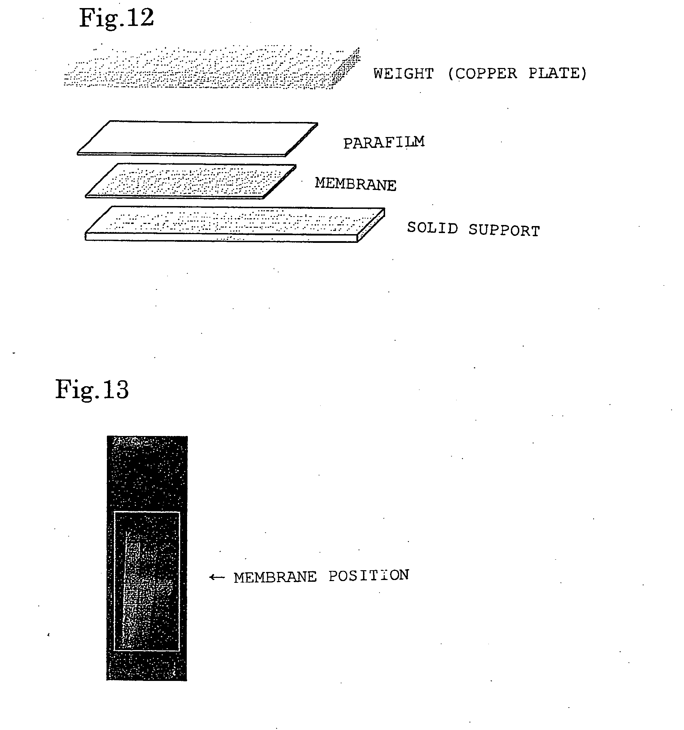

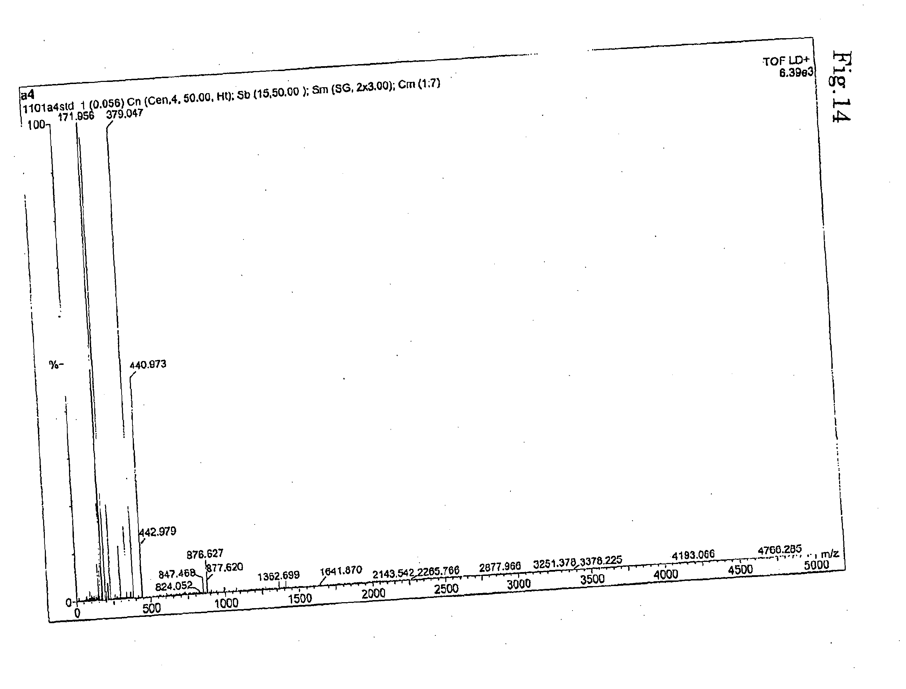

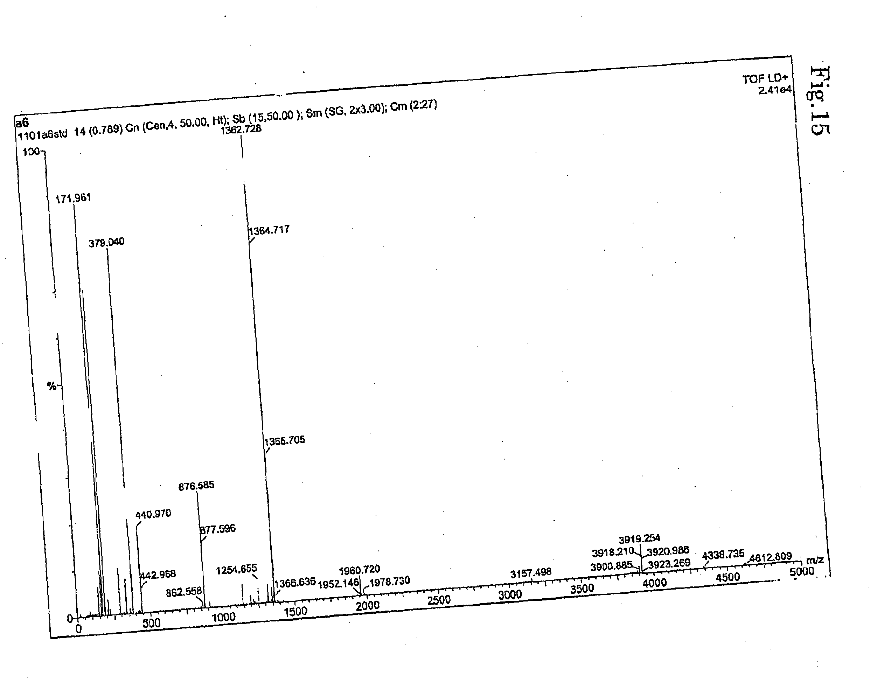

Fig. 1 shows an embodiment 1, in which Cy3-protein A and colibacillus protein were subjected to electrophoresis by the SDS-PAGE method, gel after migration was subjected to CBB staining for 15 minutes, and after destaining, image photographing was performed with the use of LAS 1000 (manufactured by Fuji Photograph Film Ltd.) . Fig. 2 shows the embodiment 1, in which gel after electrophoresis was transferred to a solid support 1, and the fluorescent intensity of the solid support after the transfer was subjected to image photographing with the use of FLA 8000 (manufactured by Fuji Photograph Film Ltd.) . Fig. 3 shows the embodiment 1, in which the solid support 1, to which gel after electrophoresis was transferred, was washed by PBS for 10 minutes, dried, and thereafter was subjected to image photographing. Fig. 4 shows the embodiment 1, in which the solid support 1, to which gel after electrophoresis was transferred, was washed by PBS for 10 minutes, further subj ected to blocking by a blocking reagent for 1 hour, thereafter Cy3-IgG was added to cause reaction at room temperature for 1 hour, washing was performed with the use of PBS for 12 hours (room temperature), and image photographing was performed. Fig. 5 shows an embodiment 2, in which Cy3-protein A was subjected to electrophoresis by the SDS-PAGE method, gel after migration was subjected to CBB staining for 15 minutes, and after destaining, image photographing was performed with the use of LAS 1000 (manufactured by Fuji Photograph Film Ltd.). Fig. 6 shows an arrangement, according to the embodiment 2, when proteins were transferred to a solid support 2 from gel after electrophoresis. Fig. 7 shows the embodiment 2, in which the solid support 2, to which proteins were transferred from gel after electrophoresis, was washed by PBS for 30 minutes and dried, and gel after transfer were subjected to image photographing with the use of FLA 8000 (manufactured by Fuji Photograph Film Ltd.). Fig. 8 shows an embodiment 3, in which Cy3-protein A and Cy3-IgA were subjected to electrophoresis by the SDS-PAGE method, gel after migration was subjected to CBB staining for 15 minutes, and after destaining, image photographing was performed with the use of LAS 1000 (manufactured by Fuji Photograph Film Ltd.) . Fig. 9 shows the embodiment 3, in which the solid support 2, to which proteins were transferred from gel after electrophoresis, was washed by PBS for 30 minutes and dried, and gel after transfer were subjected to image photographing with the use of FLA 8000 (manufactured by Fuji Photograph Film Ltd.) . Fig. 10 shows an embodiment 4, in which Cy3-protein A was subjected to electrophoresis by the SDS-PAGE method, gel was subjected to CBB staining for 15 minutes, and after destaining, image photographing was performed with the use of LAS 1000 (manufactured by Fuji Photograph Film Ltd.). Fig. 11 shows an arrangement, according to the embodiment 4, when proteins were transferred to a PVDF membrane from gel after electrophoresis. Fig. 12 shows an arrangement, according to the embodiment 4, when proteins were transferred to a solid support 3 from the PVDF membrane. Fig. 13 shows the embodiment 4, in which the solid support 3, to which proteins were transferred from the PVDF membrane, was washed by PBS for 20 minutes, dried, and then subjected to image photographing with the use of FLA 8000 (manufactured by Fuji Photograph Film Ltd.). Fig. 14 shows results when a stainless steel-DLC solid support, on which leginsulin bond proteins were immobilized, was analyzed by TOF-MS in an embodiment 5. Fig. 15 shows results when the interaction of leginsulin with a stainless steel-DLC solid support, on which leginsulin bond proteins were immobilized, was analyzed by TOF-MS in the embodiment 5.

### BEST MODE FOR CARRYING OUT THE INVENTION

According to the invention, a specimen is separated in gel electrophoresis and the gel after electrophoresis is brought into close contact with a sold support formed on a surface thereof with a carbon layer whereby substances as an object of analysis, which are separated and developed in the gel, are transferred to and immobilized on the solid support. Thus, multiple substances are subjected to mass spectrometry through desorption/ionization of the substances immobilized on the solid support.

In the invention, substances, which can be immobilized on a solid support to be analyzed, are not specifically limitative but include biosubstances such as nucleic acids such as DNA, RNA, etc., peptides, and PNA (peptide nucleic acid), etc. Peptides referred to in the specification of the present application include oligopeptides, polypeptides, and proteins. In particular, the invention is advantageous in capability of analysis of substances having a high molecular weight. Specimens, as an object of gel electrophoresis, including such substances are not specifically limitative but include extracts of the cell, extracts of the fungus body, cell-free synthetic products, PCR (Polymerase chain reaction) products, enzymegenation products, synthetic DNA, synthetic RNA, synthetic peptides, etc.

A solid support for transfer and immobilization of substances such biosubstances separated in gel by electrophoresis is not specifically limitative provided that a carbon layer is provided on a surface of a substrate to be capable of immobilization of these biosubstances. It is preferable to apply a specific chemical modification to the carbon layer. This is because substances as an object of analysis are made liable to bond and are immobilized stably due to application of a specific chemical modification.

A substrate referred to in the invention means a base material for formation of a carbon layer, and such base material is not specifically limitative but can include metals such as gold, silver, copper, aluminum, tungsten, molybdenum, chromium, platinum, titanium, nickel, etc.; alloys such as stainless steel, hastelloy, inconel, monel, duralumin, etc.; laminates of the above metals and ceramics; glass; silicone; fiber; wood; paper; plastics such as polycarbonate, fluororesin, etc.; mixtures of plastics and the above metals, ceramics, diamond, etc. Base materials formed by forming a metallic layer of platinum, titanium, etc. on a surface of glass or plastics are also usable. The metallic layer can be formed by means of sputtering, vacuum deposition, ion beam deposition, electroplating, electroless deposition, etc.

In the case where mass spectrometry such as laser desorption/ionization-time-of-flight type mass spectrometry, etc. is performed on immobilized substances, a substrate is preferably made of a conductive material such as stainless steel, aluminum, titanium, etc. since high voltage is applied to a solid support.

Carbon layers formed on a substrate in the invention are not specifically limitative but can include one of synthetic diamond, high-pressure synthetic diamond, natural diamond, soft diamond (for example, diamond like carbon), amorphous carbon, and carbonaceous matter (for example, graphite, fulleren, carbon nanotube), a mixture thereof, or a layer composed of a laminate thereof, hafnium carbide, niobium carbon, silicon carbide, tantalum carbide, thorium carbide, titanium carbide, uranium carbide, tungsten carbide, zirconium carbide, molybdenum carbide, chromium carbide, vanadium carbide, or the like, and diamond like carbon (DLC) is preferable. Here, soft diamond is a general term of an incomplete diamond structure, as a mixture of diamond and carbon, such as a so-called diamond like carbon (DLC), and a ratio of mixing is not specifically limitative.

A carbon layer is advantageous in that it is excellent in chemical stability and can resist chemical modification and reactions in bonding to substances as an object of analysis, that since it bonds to substances as an object of analysis in covalent bond, bonding is stable, that since it is devoid of ultraviolet absorption, it is transparent for a detection system UV, and that it affords current-carrying at the time of electroblotting. Also, a carbon layer is advantageous in that nonspecific adsorption is less in immobilization reaction to substances as an object of analysis.

In the invention, a carbon layer can be formed in known methods. The methods include, for example, microwave plasma CVD (Chemical vapor deposit) method, ECRCVD (Electric cyclotron resonance chemical vapor deposit) method, IPC (Inductive coupled plasma) method, D.C. sputtering method, ECR (Electric cyclotron resonance) sputtering method, ionization deposit method, arc type deposit method, laser deposit method, EB (Electron beam) deposit method, resistance heating deposit method, etc.

In the high-frequency plasma CVD method, a material gas (methane) is decomposed by glow discharge, which is generated between electrodes by high frequency, and a DLC (diamond like carbon) layer is composed on a substrate. In the ionization deposit method, thermal electrons created at a tungsten filament are made use of to decompose/ionize a material gas (benzene), and a carbon layer is formed on a substrate by application of bias voltage. The ionization deposit method may be used to form a DLC layer in a mixed gas, which is composed of 1 to 99 vol. % of hydrogen gas and the remaining 99 to 1 vol. % of methane gas.

In the arc type deposit method, a carbon layer can be formed by applying a D.C. voltage between a solid graphite material (cathode vapor source) and a vacuum vessel (anode) to cause arc discharge in a vacuum to generate plasma of carbon atoms from the cathode and applying a more negative bias voltage than the vapor source to a substrate to thereby accelerate carbon ions in the plasma toward the substrate.

In the laser deposit method, a carbon layer can be formed by irradiating, for example, Nd: YAG laser (pulse oscillation) light on a target plate of graphite to melt the same to accumulate carbon atoms on a glass substrate.

A carbon layer on a surface of a solid support according to the invention normally has a thickness in the order of that of a monomolecular layer to 100 µm, preferably, a thickness of 2 nm to 1 µm, and more preferably, a thickness of 5 nm to 500 nm since in case of being too small in thickness, there is a possibility that a surface of a backing solid support is locally exposed, and conversely in case of being too large in thickness, productivity becomes poor. In addition, the whole solid support may be made of a carbon material.

In order to perform laser desorption/ionization-time-of-flight type mass spectrometry, etc. directly after transfer of substances from gel after electrophoresis, a solid support in the invention is preferably in the form of a flat plate. The solid support is not specifically limitative in size but normally has a size of the order of 10 to 200 mm in width × 10 to 200 mm in length × 0.1 to 20 mm in thickness.

For immobilization of biosubstances such as nucleic acids, peptides, etc., it is preferable to activate a surface of a substrate, on which a carbon layer is formed, through chemical modification. Such surface activation can be suitably selected as expediting immobilization of a target substance, by those skilled in the art and is not specifically limitative but includes, for example, introduction of amino group, carboxyl group, epoxy group, formyl group, hydroxyl group, carbidiimide group, and active ester group. Also, introduction of metal chelate such as nickel chelate, cobalt chelate, etc. is effective.

Introduction of amino group can be carried out as by irradiating ultraviolet rays on, for example, a carbon layer in chlorine gas to chlorinate the same and thereafter irradiating ultraviolet rays on the same in ammonia gas. Alternatively, such introduction can also be carried out by reacting polyvalent amines, such as methylenediamine, ethylenediamine, etc., with the carbon layer chlorinated. Alternatively, such introduction can also be carried out by processing a carbon layer surface with ammonia plasma or ethylenediamine plasma.

Introduction of carboxyl group can be carried out, for example, by reacting a suitable polyvalent carboxylic acid with the carbon layer aminated in the manner described above.

Introduction of epoxy group can be carried out as by reacting a suitable polyvalent epoxy compound with the carbon layer aminated in the manner described above. Alternatively, such introduction can also be effected as by reacting an organic peroxide with a carbon-carbon double bond contained in the carbon layer. As an organic peroxide, there are listed acetyl hydroperoxide, peroxybenzoic acid, diperoxyphthalic acid, performic acid, trifluoroacetyl hydroperoxide, etc.

Introduction of formyl group can be carried out, for example, by reacting glutaraldehyde with the carbon layer aminated in the manner described above.

Introduction of hydroxyl group can be carried out, for example, by reacting water with the carbon layer chlorinated in the manner described above.

Introduction of carbodiimide group can be carried out, for example, by reacting carbodiimides with the carbon layer aminated in the manner described above.

Introduction of active ester group can be carried out, for example, by irradiating ultraviolet rays on a carbon layer in chlorine gas to chlorinate a surface of the same, thereafter irradiating ultraviolet rays on the carbon layer in ammonia gas to aminate the same, carboxylating the carbon layer with the use of a suitable acid chloride or dicarboxylic anhydride, and causing anhydration condensation of a distal carboxyl group with carbodiimide or dicyclohexylcarbodiimide and N-hydroxysuccinimide. Owing to this processing, a group, to which active ester group such as N-hydroxysuccinimide, etc. is bonded, can be formed on a distal end of hydrocarbon group through amide bond.

In case of immobilization of nucleic acids such as DNA, RNA, etc., it is preferable to introduce N-hydroxysuccinimide group, carbodiimide group, epoxy group, and formyl group.

In case of immobilization of peptides, it is preferable to introduce N-hydroxysuccinimide group, carbodiimide group, epoxy group, formyl group, and metal chelate. When a solid support, into which metal chelate is introduced, it is possible to effectively and stably immobilize a peptide having an affinity labeling with metal ions such as polyhistidine configuration, etc. Introduction of metal chelate can be carried out, for example, by chlorinating a substrate formed with a carbon layer, thereafter aminating the substrate, and adding halocarboxylic acid such as chloroacetic acid, etc. to introduce a chelate ligand. Labeling of polyhistidine configuration, etc. can be introduced by a method well known to those skilled in the art.

Electrophoresis methods usable for separation of specimens in the invention are not specifically limitative but can include, for example, agarose gel electrophoresis method, sieving agarose gel electrophoresis method, degeneration agarose gel electrophoresis method, polyacrylamide gel electrophoresis method, SDS polyacrylamide gel electrophoresis method, isoelectric-focussing gel electrophoresis method, two-dimensional electrophoresis method, etc. Those skilled in the art can suitably select a kind of electrophoresis method as used on the basis of a kind of and molecular weight of a substance as an object of separation.

The agarose gel electrophoresis method is one made best use of for separation of nucleic acids. Since agarose gel is large in gel network as compared with polyacrylamide gel, it is possible to separate DNA fragments of several tens to several hundreds of Kbp on the basis of differences in length and molecular architecture. Since the charge state of whole DNA fragments is mainly dependent upon the number of phosphoric acid groups, mobility is in proportion to dimensions of DNA fragments. When migration is effected while an electric field is intermittently changed in direction, it is also possible to separate giant DNA such as yeast chromosome, etc. (pulse field electrophoresis).

Polyacrylamide gel electrophoresis of nucleic acids is a method, which is mainly used in analysis of DNA fragments and makes use of a minute network of polyacrylamide gel to separate short-chained (up to 1 Kbp) fragments as compared with the case of the agarose gel electrophoresis, on the basis of length and molecular architecture. By virtue of being strongly affected by the cubic structure (conformation) of DNA, estimation of DNA chain length is limited to the case of migration of double-stranded DNA. Since it is expected that a single-stranded DNA is structured variously, correlation is not found between mobility and DNA chain length and such DNA is in some cases detected as multiple bands. A change in structure is generated even by a slight difference in DNA base and reflected on a pattern of migration. The DNA fragment analysis method (SSCP: Single-Strand Conformation Polymorphism) has also been developed to be used for analysis of gene mutation. It is known that double-stranded DNA fragments containing a specific configuration (repeated configuration, deviation of base, etc.) strain a DNA structure and the polyacrylamide gel electrophoresis method is also usable for conformation·performance analysis of DNA. Also, a single-stranded DNA can also be separated according to chain length in modified gel containing urea without being affected by structure.

The SDS (Sodium dodecyl sulfate)-polyacrylamide gel electrophoresis method (SDS-PAGE method) is one, in which a target protein is degenerated in high order architecture and separated according to a difference in molecular weight. Since polyacrylamide gel is dense in pore size, it is suited to separation of proteins and peptides of 100 to 200 KDa or less. Since the method is simple in operation and high in reproducibility, it is most frequently used in electrophoresis of proteins. Usually, a reducer such as β-mercaptoethanol, DTT (Dithiothreitol), etc. is added at the time of preparation of migration specimens to cut the S-S bond (disulphid bond) of proteins. Since electric charge of molecules is substantially determined by the bonding amount of SDS, electrophoresis can be used to separate polypeptide molecules according to molecular weight. Since SDS is a strong anion surfactant, it is suited to solubilization of insoluble proteins such as membrane proteins.

Isoelectric-focussing electrophoresis is an electrophoresis method, in which proteins are separated with the use of differences in isoelectric point (pI) and isoelectric point measurement and analysis of target proteins are carried out. Electric charges of amino-acid side chain, amino end, and carboxylic end, which constitute a protein, vary according to the pH condition and a value of pH, in which a total sum of electric charges becomes zero, makes an isoelectric point. In order to perform isoelectric-focussing electrophoresis, it is necessary to create a pH gradient in a migration gel. When a sample is added to the migration gel' and an electric field is applied, respective proteins migrate in the gel to be headed for the same pH as a proper pI. In creating a pH gradient gel, there are usable a method of forming a pH gradient by adding a carrier ampholyte to gel and applying an electric field, and a method (IPG method: Immobilized pH gradient) of using acrylamide derivatives having various pI side chains to form a pH gradient simultaneously with creation of gel, and the IPG method, which is excellent in separative power, reproducibility, and addition allowable value, is mainly used in proteomics. Precast gel (Immobiline Dry Strip Gel) for exclusive use in the IPG method is commercially available. Isoelectric-focussing electrophoresis using a carrier ampholyte has the separative power of 0.01 to 0.02 pH unit, and the IPG method enables separation even with a difference in the order of 0.001 pH unit.

The two-dimensional electrophoresis method is one, in which proteins are separated two-dimensionally by two-stage electrophoresis. Generally, isoelectric-focussing electrophoresis is used in a primary dimension to separate proteins, and the SDS-PAGE method is used in a secondary dimension to perform separation according to molecular weight. Since the both methods are very high in separative power, it is possible to separate all cellular proteins into spots amounting to several thousands or more. It is general to use the immobilized pH gradient method (IPG method), which is excellent in reproducibility and resolving power, for the primary-dimension migration. Also, in order to obtain further many spots, it is possible to separate only a target pH portion in a Narrow pH IPG gel on the basis of results of separation in a wide pH range and to perform the secondary-dimension electrophoresis with the use of a large sized gel of 20 cm or more.

According to the invention, the agarose gel electrophoresis method is preferably used in case of separation of DNA, RNA, and the SDS polyacrylamide gel electrophoresis method and the two-dimensional electrophoresis method are preferably used in case of separation of peptides. These electrophoresis methods can be carried out in those methods usually used by those skilled in the art.

After electrophoresis, gel is cut to a size suited to placement on a solid support as used, the gel and the solid support are brought into close contact with each other, and object substances being analyzed and separated in the gel are transferred to the solid support to be immobilized thereon. A method of transfer to the solid support is not specifically limitative but can adopt methods usually used in the art. There are listed, for example, a capillary type blotting making use of capillary phenomenon, a vacuum type blotting, which involves draw by a pump, and electroblotting making use of an electric method. In case of transfer of nucleic acids, the capillary type blotting is preferably used, and in case of transfer of peptides, electroblotting is preferably used.

In electroblotting, while one of tank type, semi-dry type, and semi-wet type ones are usable, the semi-dry type electroblotting is preferably used from the viewpoint of a small use of buffer, a short reaction time, or the like. As a blotting apparatus, it is possible to use electroblotting apparatuses usually used in the art. Electrification conditions in electroblotting preferably include 1 to 500 minutes, preferably 5 to 100 minutes at a constant voltage, 200 V or less, preferably 0.1 to 10 V. Since metal will solve out when voltage is made higher than the oxidation potential of a metallic substrate, however, it is preferable to perform electroblotting at a lower voltage than the oxidation potential of the substrate metal.

In a further embodiment of the invention, substances being an object of analysis may be immobilized by direct spotting to a solid support according to the invention without electrophoresis and analyzed by means of TOF-MS, or the like. Also, substances disposed on a solid support may be immobilized, substances interacting therewith may be further immobilized by means of spotting, and the substances thus interacted may be analyzed by means of TOF-MS, or the like.

An embodiment of electrophoresis and transfer in the invention in case of analysis of proteins in specimens will be shown below. First, proteins in specimens are solubilized. That is, proteolytic enzymes present in specimens are deactivated, and heat treatment is performed in boiling water for a specific period of time for the purpose of effectively degenerating proteins by means of SDS and β-mercaptoethanol. Subsequently, a specific amount is poured into respective lanes of a SDS-polyacrylamide gel, and migration is made at a specific voltage with glycine trisbuffer, which includes SDS, as buffer for migration, for a specific period of time. After migration, the gel is immersed in that glycine trisbuffer (transfer buffer), which has been beforehand cooled, for a specific period of time to be equilibrated. Subsequently, an electroblotting apparatus mounts thereto the gel on a cathode side and a solid support for transfer on an anode side. A transfer buffer is added to a transfer tank, and transfer is performed at a specific voltage in ice application for a specific period of time. At this time, it is preferable from the viewpoint of an increase in efficiency of transfer to arrange a filter paper, which holds a buffer and ion-exchange water, between the cathode and the gel and between the anode and the solid support. As a buffer held in the filter paper on the cathode side, there are listed Tris, ε-aminocaproic acid, acetic acid, EDTA, phosphoric acid, boric acid, tartaric acid, SDS, etc. In case of using a buffer holding Tris and ε-aminocaproic acid, aminocaproic acid preferably has a concentration of the order of 1000 mM or less. The filter paper on the anode side preferably holds ion-exchange water.

In a still further embodiment of the invention, substances being an object can be transferred to a membrane used in the prior art from gel after electrophoresis, and transferred to a solid support according to the invention from the membrane whereby substances separated in the gel can also be immobilized on the solid support. As materials for the membrane usable in this case, there are listed nitrocellulose, PVDF (plyvinylidene fluoride), nylon, positive charge nylon, etc. In transfer of proteins, it is preferable to use PVDF having a highest binding capacity for proteins, and also in transfer of nucleic acids, it is preferable to use PVDF having a small nonspecific adsorption for nucleic acids. Transfer from gel, which is a migration substance, to a membrane, and transfer from the membrane to a solid support can be carried out in the same method as that described above. In transfer from gel to a membrane, it is preferable to use electroblotting, and electrification conditions in electroblotting preferably include 5 to 120 minutes at 0.1 to 50 V. In transfer from a membrane to a solid support, it is preferable to make use of an electroblotting apparatus.

In a further embodiment of the invention, mass spectrometry can also be performed by immobilizing substances separated by electrophoresis on a solid support, causing reaction of substances, which interact with the substances, to form composites, and ionizing the formed composites. Mass spectrometry referred to in the invention indicates a method that makes use of electric interaction to analyze ions of atoms/molecules on the basis of differences in mass. Mass spectrometers have three different abilities of creation·separation·detection of ions. In the case where proteins are immobilized on a solid support by the methods described above, mass spectrometry can be made by reacting an antibody for the proteins to form composites, and ionizing the composites as by means of irradiation of laser. Also, in the case where nucleic acids such as DNA, RNA, etc. are immobilized on a solid support, nucleic acids being complementary to the nucleic acids are caused to hybridize with the nucleic acids on the solid support, and the double strand as formed is ionized to enable mass spectrometry. It is possible to make use of, for example, enzyme reaction, biotin-streptavidin interaction, etc. as another interaction. By performing mass spectrometry of composites formed by interaction, it is possible to analyze a base sequence or an amino acid sequence of target molecules having interacted specifically with probe molecules. Also, mass spectrometry can be performed by ionizing only molecules, which have interacted with those molecules, which are immobilized on a solid support.

It is possible to carry out mass spectrometry on substances immobilized on a solid support with the use of means such as laser desorption/ionization-time-of-flight type mass spectrometry. Listed as a form of ionization methods usable at the time of mass spectrometry are the matrix assist laser desorption (MALDI) method, the ionization method (EI) by electron impact, the photoionization method, the ionization method, in which α or β ray radiated from radioactive isotope and having a large LET is used, the secondary ionization method, the high-speed atom impact ionization method, the electric-field ionization method, the surface ionization method, the chemical ionization (CI) method, the field ionization (FI) method, the ionization method by spark discharge, etc., among which the matrix assist laser desorption (MALDI) method and the ionization method (EI) by electron impact are preferable. Also, listed as a form of separation are linear or nonlinear reflection time-of-flight (TOF), single or multiple quadrupole, single or multiple magnetic sector, Fourier-transform ion cyclotron resonance (FTICR), ion capture, high frequency, ion capture/time-of-flight, etc., among which forms using the linear or nonlinear reflection time-of-flight (TOF), high frequency, ion capture/time-of-flight are preferable. Mass spectrometry can be carried out by combining the ionization methods and the form of separation, or the form of separation, which includes combinations thereof, and a form of detection, such as electric recording and photographic recording. From the viewpoint of ionizing high molecular substances such as biosubstances, etc. and analyzing multiple substances on a solid support, it is preferable to make use of laser desorption/ionization-time-of-flight type mass spectrometry.

The procedure of mass spectrometry using MALDI-TOF MS will be described below as an embodiment of the invention.

A matrix such as α-cyanohydroxy cinnamic acid, sinapic acid, etc. is added to a solid support, on which substances being an object of analysis are immobilized, according to the invention, and dried. Subsequently, the solid support is mounted on a flat target of MALDI-TOF MS. MassLynx software, etc. is used to start mass spectrometry. It is possible to control all of measurement and analysis with MassLynx. At the time of measurement, a parameter file for automatic measurement, a process file for data process performed after measurement and database analysis, a specimen list, etc. are fabricated. ProteinLynx software is used to be able to perform data processing on MassLynx. Mass spectrum is created from data as taken in, and the created spectrum is heightened in accuracy by MaxEnt 3 (Micromass Ltd.) software and then converted into monoisotopic·peak data. Succeedingly, calibration is performed to make final data having a mass error of about 50 ppm. Correct masses of proteins having interacted with one another can be found from the data.

Subsequent to mass spectrometry, an amino acid sequence and identification of proteins can be made. An analysis mode of MALDI-TOF MS is made a mode that can detect a post-source decay (PSD) spectrum, and an amino acid sequence of proteins having interacted with one another is analyzed. Succeedingly, SWISSPROT database is retrieved on the basis of the amino acid sequence and proteins are identified. Alternatively, that solid support, on which substances being an object of analysis are immobilized, is mounted on MALDI-TOF/TOFMS andMALDI Q-TOF MS to enable analyzing the amino acid sequence and identifying proteins having interacted with one another.

The invention will be more concretely described by way of embodiments but the invention is not limited to the embodiments.

### EMBODIMENTS

### (Embodiment 1) Transfer of proteins to a Ti-Pt-DLC solid support

### Fabrication of a solid support

Magnetron sputtering was used to form a Ti layer on a slide glass having a size of 76 mm × 26 mm × 1.1 mm and a Pt layer thereon. Conditions for sputtering were as follows. A thickness of metallic layers as created was 100 nm for each of the Ti layer and the Pt layer.

**Table 1**

| Conditions for formation of Ti layer and Pt layer thereon | | | | | |
|---|---|---|---|---|---|
| Metallic layer | B.P.(torr) | Voltage (V) | Current (mA) | Time (minute) | Tickness (nm) |
| Ti | 3 × 10⁻⁵ | 380 | 200 | 3 | 100 |
| Pt | 3 × 10⁻⁵ | 360 | 200 | 1 | 100 |

A diamond like carbon layer was formed on a substrate formed with the metallic layers. The diamond like carbon layer was formed under the following conditions by the ionization deposit method. The diamond like carbon layer as created had a thickness of 20 nm.

**Table 2**

| Conditions for formation of diamond like carbon layer | | | | | | |
|---|---|---|---|---|---|---|
| | H₂ (vol. %) | CH₂ (vol. %) | Pressure (Pa) | Vb (V) | Va (V) | Time (sec) |
| Substrate 1 | 2.5 | 47.5 | 3 | 500 | 50 | 30 |
| Vb: Acceleration voltage | | | | | | |
| Va: Anode voltage | | | | | | |

After the diamond like carbon layer was formed on the substrate 1 in a manner described above, a surface of the carbon layer was chlorinated in chlorine gas by irradiation of ultraviolet rays for 1 minute, aminated in ammonia gas by irradiation of ultraviolet rays for 10 minutes, carboxylated by succinic acid chloride, and activated by N-hydroxysuccinimide to fabricate a solid substrate 1.

### Electrophoresis by the SDS-PAGE method

Electrophoresis was performed by using, as specimens, Cy3-protein A (1.5 µg, manufactured by SIGMA Ltd.), colibacillus protein (0.5 µg), and a marker (Prestained Broad Range, 0.5 µl, manufactured by BIO RAD Ltd.) and using a SDS-PAGE apparatus (manufactured by ATTO Ltd., AE-7300 type). 10 % polyacrylamide gel was used as a migration gel. Glycine trisbuffer (pH 8.3) containing 0.1 % SDS was used for a migration buffer, and migration was performed for 35 minutes at 200 V. After the termination of migration, CBB staining was performed for 15 minutes, and after destaining, image photographing was performed with the use of LAS 1000 (manufactured by Fuji Photograph Film Ltd.) (Fig. 1). A band of Cy3-protein A was detected around about 50 kDa.

### Electroblotting

The polyacrylamide gel after migration was immersed in that transfer buffer (25mM Tris, 5 % methanol), which had been beforehand cooled, for 30 minutes to be equilibrated. Succedingly, the polyacrylamide gel was cut to a size suited to placement on the solid support 1, brought into close contact with the solid support, and electrification was made under the following conditions with the polyacrylamide gel on a cathode side and the solid support on an anode side.

**Table 3**

| Conditions for electrification | | | |
|---|---|---|---|
| Gel size (mm) | Voltage (V) | Current (mA) | Time (minute) |
| 30 × 20 × 1 | 25 | 2→0.4 | 40 |

### Measurement of fluorescent intensity

When the fluorescent intensity of the solid support 1 after transfer of proteins was measured with the use of FLA 8000 (manufactured by Fuji Photograph Film Ltd.), it was measured to amount to 28270 and it was confirmed that Cy3-protein A was immobilized on a surface of the solid support (Fig. 2). Succeedingly, when the fluorescent intensity after washing of the solid support with PBS for 10 minutes was likewise measured, it was measured to amount to 9766 and reduced to about 1/3 (Fig. 3). When blocking was performed with the use of a blocking reagent (manufactured by Roche Ltd.) for 1 hour and the fluorescent intensity was measured, the fluorescent intensity was not varied. Subsequently, after 500 µl of 0.05µg/µl Cy3-IgG was added to cause reaction at room temperature for 1 hour, washing was performed at room temperature with the use of PBS for 12 hours and the fluorescent intensity was measured (Fig. 4). The fluorescent intensity amounted to 16448 and so increased, from which it was found that protein A and IgG bonded together, that is, the immobilized proteins were maintained in binding capacity.

### (Embodiment 2) Transfer of proteins to a stainless steel-DLC solid support

### Fabrication of a stainless steel-DLC solid support

A diamond like carbon layer was formed on a stainless-steel substrate. In order to decrease flatness and a fluorescent background, the stainless-steel substrate was beforehand subjected to buffing and then electropolishing. A diamond like carbon layer was formed under the following conditions by the ionization deposit method. The diamond like carbon layer as created had a thickness of 20 nm.

**Table 4**

| Conditions for formation of diamond like carbon layer | | | | | |
|---|---|---|---|---|---|
| H₂ (vol. %) | CH₂ (vol. %) | Pressure (Pa) | Vb (V) | Va (V) | Time (sec) |
| 2.5 | 47.5 | 3 | 500 | 50 | 30 |
| Vb: ACCELERATION VOLTAGE | | | | | |
| Va: ANODE VOLTAGE | | | | | |

A stainless steel-DLC substrate was activated by immersing a solid support in a solution, which was formed by solving 6.76 g of N-hydroxysuccinimide and 12 g of 1-ethyl-3-(3-dimethylaminopropyl) carbodiimide hydrochloride in 300 ml of ion-exchange water, for 20 minutes, and thus a solid support 2 was fabricated.

Like the embodiment 1, the SDS-PAGE method (manufactured by ATTO Ltd., AE-6530 type) was used to cause migration of Cy3-protein A (0.2 µg, manufactured by SIGMA Ltd.). After the termination of migration, CBB staining was performed for 15 minutes, and after destaining, image photographing was performed with the use of LAS 1000 (manufactured by Fuji Photograph Film Ltd.) (Fig. 5).

The gel after migration was taken out and cut to a size suited to placement on the solid support 2, and thereafter the gel was immersed in a transfer buffer B (25mM Tris, 5 %methanol). Sheets of filter paper (manufactured by ATTO Ltd.) having been beforehand cut to a size for placement on the solid support 2, respectively, were immersed in a transfer buffer A (0.3M Tris, 5 % methanol), a transfer buffer C (25mM Tris, 40mM ε-aminocaproic acid, 5 % methanol), or ion-exchange water. Succeedingly, sheets of filter paper, the gel, and the solid support were stacked on one another and mounted on a semidry blotting apparatus as shown in Fig. 6 in a manner to eliminate entry of bubbles and electrification was made at 8 V and 4 mA for 60 minutes to permit proteins to be transferred to the solid support 2. The solid support 2 after transfer was washed by ion-exchange water at room temperature for 30 minutes and dried, and then image photographing was performed on the solid support and the gel after transfer with the use of FLA 8000 (manufactured by Fuji Photograph Film Ltd.) (Fig. 7).
<1> shows results in the case where transfer was performed in a state, in which both sheets of filter paper on a cathode side and on an anode side were caused to contain ion-exchange water. Cy3-protein A got away little from the gel and was not immobilized on the solid support.
<2> shows results in the case where transfer was performed in a state, in which a sheet I of filter paper was caused to contain the transfer buffer C, a sheet II of filter paper was caused to contain the transfer buffer B, and a sheet III of filter paper was caused to contain the transfer buffer A. Cy3-protein A in the gel decreased somewhat but was not immobilized on the solid support.
<3> shows results in the case where transfer was performed in a state, in which a sheet I of filter paper was caused to contain the transfer buffer C and sheets II and III of filter paper were caused to contain ion-exchange water. Moisture on the gel was wiped off before the gel was stacked on the solid support. As a result, it was confirmed that Cy3-protein A got away from the gel although not evenly. Also, immobilization on the solid support was seen although not good in shape.
<4> shows results in the case where transfer was performed in a state, in which a sheet I of filter paper was caused to contain the transfer buffer C, sheets II and III of filter paper were caused to contain ion-exchange water, and the gel was stacked on the solid support without wiping off moisture on the gel. As a result, it was confirmed that Cy3-protein A got away from the gel although not evenly. Also, Cy3-protein A was immobilized on the solid support while being good in shape.

From the above, in transferring proteins in gel to a solid support, it is consideredpreferable that transfer be performed in a state, in which a sheet of filter paper on a cathode side is caused to contain a transfer buffer, a sheet of filter paper on an anode side is caused to contain ion-exchange water, and moisture on gel after migration is not wiped off.

### (Embodiment 3) Transfer of proteins to a stainless steel-DLC solid support

Like the embodiment 1, the SDS-PAGE method (manufactured by ATTO Ltd., AE-6530 type) was used to cause migration of Cy3-protein A (50 ng, manufactured by SIGMA Ltd.) and Cy3-IgA (100 ng, manufactured by SIGMA Ltd.). After the termination of migration, CBB staining was performed for 15 minutes, and after destaining, image photographing was performed with the use of LAS 1000 (manufactured by Fuji Photograph Film Ltd.) (Fig. 8). In addition, 12 % polyacrylamide gel was used for migration of Cy3-IgA. Also, a solid support 2 was fabricated in the same manner as in the embodiment 2.

Gel after migration was taken out and cut to a size suited to placement on the solid support 2, and thereafter the gel was immersed in a transfer buffer (25mM Tris, 5 % methanol). Sheets of filter paper (manufactured by ATTO Ltd.) having been beforehand cut to a size of the solid support, respectively, were immersed in a transfer buffer C1 (25mM Tris, 40mM ε-aminocaproic acid, 5 % methanol), a transfer buffer C2 (25mM Tris, 400mM ε-aminocaproic acid, 5 % methanol), or ion-exchange water. Succeedingly, sheets of filter paper, the gel, and the solid support were stacked in the same manner as shown in Fig. 6 of the embodiment 2 and mounted on a semi-dry blotting apparatus in a manner to eliminate entry of bubbles. At this time, three sheets of filter paper on a cathode side were used to contain the transfer buffer C1 or C2, and three sheets of filter paper on an anode side were used to contain ion-exchange water. Electrification was made at 2 V and 2 µA for 60 minutes to permit proteins to be transferred to the solid support 2. The solid support 2 after transfer was washed by ion-exchange water at room temperature for 30 minutes and dried. Then, image photographing was performed on the solid support and the gel after transfer with the use of FLA 8000 (manufactured by Fuji Photograph Film Ltd.) (Fig. 9).

As a result, it was found that efficiency in immobilization was higher when sheets of filter paper on a cathode side contained the transfer buffer C1, that is, a buffer with ε-aminocaproic acid having a concentration of 40 mM at the time of transfer to the solid support.

### (Embodiment 4) Transfer of proteins to a Ti-Pt-DLC solid support from a PVDF membrane

After a diamond like carbon layer was formed on a substrate 1 in the same manner as in the embodiment 1 and a surface of the substrate was chlorinated in chlorine gas by irradiation of ultraviolet rays for 1 minute, the surface was aminated by a processing in ammonia plasma with the use of an ionization deposit apparatus. Thereafter, polyacrylic acid was used to perform a further processing after a processing was performed with succinic anhydride. Then, activation was caused by N-hydroxysuccinimide to fabricate a a solid support 3.

Also, polyacrylamide gel was used for electrophoresis of Cy3-protein A in the same manner as in the embodiment 1. After the termination of migration, CBB staining was performed for 15 minutes, and after destaining, image photographing was performed with the use of LAS 1000 (manufactured by Fuji Photograph Film Ltd.) (Fig. 10). A band of Cy3-protein A was detected around about 50 kDa.

A transfer buffer A (0.3M Tris, 5% methanol), a transfer buffer B (25mM Tris, 5 % methanol), and a transfer buffer C (25mM Tris, 40mM ε-aminocaproic acid, 5 % methanol) were prepared. Gel after migration was taken out and immersed in about 200 ml of the transfer buffer B to be lightly shaken for 5 minutes. A PVDF membrane (manufactured by ATTO Ltd.) having been beforehand cut to a size of the gel was immersed in a small amount of methanol for 5 seconds, and thereafter immersed in about 100 ml of the transfer buffer B to be shaken for 5 minutes or more. Two, one, and three sheets of filter paper having been beforehand cut to a size of the gel were immersed in about 200 ml of the transfer buffers A, B, C, respectively. Succeedingly, the sheets of filter paper, the gel, and the PVDF membrane were stacked and mounted on a semi-dry blotting apparatus (manufactured by Nippon Eido Ltd.) as shown in Fig. 11 in a manner to eliminate entry of bubbles, and electrification was made at 15 V for 60 minutes. After transfer, the PVDF membrane was immersed in about 200 ml of PBS to undergo permeation for 5 minutes.

The PVDF membrane after migration was cut to a size suited to placement on the solid support 3, and stacked in the order shown in Fig. 12, and a weight of 35 g/cm² was put thereon. Being left at room temperature for 1 hour, Cy3-protein A on the membrane was transferred to the solid support 3. Succeedingly, the solid support 3 was washed at room temperature with PBS for 20 minutes, and then dried. Then, image photographing was performed on the solid support with the use of FLA 8000 (manufactured by Fuji Photograph Film Ltd.). Fig. 13 shows the photographed image. The membrane was brought into close contact with a region surrounded in the image. Since fluorescence was detected in a corresponding position, it is found that Cy3-protein A was immobilized on the solid support.

### (Embodiment 5) Analysis with TOF MS

1 µl of leginsulin bond protein water solution (112.5 ng/µl) was spotted on the stainless steel-DLC solid support fabricated in the embodiment 2 and left for 10 minutes. Succeedingly, the solid support was shaken and washed with ultrapure water for 10 minutes, and thereafter dried to fabricate a leginsulin bond protein immobilized solid support.

1 µl of leginsulin water solution (37.5 ng/µl) was spotted on spots on the leginsulin bond protein immobilized solid support thus obtained and the solid support was left for 5 minutes. Succeedingly, the solid support was shaken and washed with ultrapure water for 5 minutes, and thereafter dried to fabricate a leginsulin bond protein-leginsulin immobilized solid support.

0.5 µl of matrix solution (ε-cyanohydroxy cinnamic acid solution) was added to the leginsulin bond protein immobilized solid support and the leginsulin bond protein-leginsulin immobilized solid support, which were obtained in the above manner, and dried.

These solid supports were mounted on a flat target of MALDI-TOF-MS (manufactured by TofSpec-2E, Micromass LTD.). MassLynx software was used to carry out mass spectrometry. All of measurement and analysis can be controlled by MassLynx software. At the time of measurement, a parameter file for automatic measurement, process files for data process performed after measurement and process of database analysis, a process file for database analysis, a specimen list, etc. were fabricated.

Data processing was made on MassLynx with the use of ProteinLynx software. Mass spectrum was created from data as taken in, and the created spectrum was heightened in accuracy by MaxEnt 3 (Micromass Ltd.) software and then converted into monoisotopic·peak data. Succeedingly, calibration was performed to make final data having a mass error of about 50 ppm. Correct masses of proteins having interacted with one another were found from the data. Fig. 14 shows results of TOF-MS analysis of the leginsulin bond protein immobilized solid support. Fig. 15 shows results of TOF-MS analysis of the leginsulin bond protein-leginsulin immobilized solid support.

It is found from the chart of the TOF-MS chart that a leginsulin peak of 3920Da was detected. It has been made apparent from the above that proteins immobilized on a solid support of the invention can be analyzed by TOF-MS.

### INDUSTRIAL APPLICABILITY

With the method according to the invention, a multiplicity of specimens can be rapidly analyzed since after separation of multiple substances contained in a specimen by electrophoresis, substances contained in respective bands can be immobilized on a solid support to simultaneously and directly carry out mass spectrometry on multiple substances without refining.

Accordingly, the invention provides means being very useful in analysis of biosubstances such as nucleic acids, proteins, etc.

## Claims

1. A solid support comprising a carbon layer on a surface thereof, and wherein after substances contained in a specimen are separated by gel electrophoresis, the substances are immobilized on the solid support by transfer of the substances separated in the gel.

2. A solid support comprising a carbon layer on a surface thereof, and wherein after substances contained in a specimen are separated through gel electrophoresis, the substances are immobilized on the solid support by transferring the substances separated in the gel to a membrane and further transferring the substances transferred to the membrane.

3. A solid support, in which composites are formed by adding further substances, which interact with the substances immobilized on the solid support according to claim 1 or 2, to the substances.

4. The solid support according to any one of claims 1 to 3, wherein the carbon layer comprises a diamond like carbon layer.

5. The solid support according to any one of claims 1 to 4, wherein the carbon layer has a thickness of a monomolecular layer to 100 µm.

6. The solid support according to any one of claims 1 to 5, wherein the surface of the carbon layer is activated through chemical modification.

7. The solid support according to any one of claims 1 to 6, wherein the immobilized substances comprise nucleic acids or peptides.

8. A method for mass spectrometry through desorption/ionization of multiple substances or composites immobilized on the solid support according to any one of claims 1 to 7.

9. A solid support comprising a carbon layer on a surface thereof, and for use in the method according to claim 8.
